Europäisches Patentamt

European Patent Office

Office européen des brevets

(11) Numéro de publication: **0 322 327 B1**

(12) **FASCICULE DE BREVET EUROPEEN**

(45) Date de publication de fascicule du brevet: **02.09.92** (51) Int. Cl.⁵: **A01D 34/66**

(21) Numéro de dépôt: **88440105.0**

(22) Date de dépôt: **16.12.88**

(54) **Faucheuse avec rigidification perfectionnée de la barre de coupe.**

(30) Priorité: **21.12.87 FR 8718131**

(43) Date de publication de la demande:
**28.06.89 Bulletin 89/26**

(45) Mention de la délivrance du brevet:
**02.09.92 Bulletin 92/36**

(84) Etats contractants désignés:
**AT BE DE ES FR GB IT NL**

(56) Documents cités:
**EP-A- 0 097 943**
**DE-A- 1 582 356**
**FR-A- 2 380 713**
**FR-A- 2 456 461**

(73) Titulaire: **KUHN S.A.**
**4, Impasse des Fabriques**
**F-67700 Saverne(FR)**

(72) Inventeur: **Neuerburg, Horst**
**6, rue des Aubépines**
**F-67700 Saverne(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne une faucheuse comportant :
- un châssis,
- une barre de coupe réalisée en un ou plusieurs tronçons et munie d'organes de coupe, ladite barre de coupe d'épaisseur relativement faible, étant liée audit châssis au moyen d'organes de liaison s'étendant dans le voisinage de chacune des extrémités de ladite barre de coupe, et
- des organes d'entraînement et des organes de transmission destinés à la mise en mouvement des organes de coupe.

On connaît une telle faucheuse (FR-A-2 456 461), dont la barre de coupe est constituée d'une poutre plate s'étendant transversalement à la direction de travail et formée par deux tronçons liés entre eux par leurs extrémités en regard l'une de l'autre au moyen d'organes de liaison. A la partie supérieure de cette poutre s'étendent des disques munis de couteaux qui tournent autour d'axes dirigés vers le haut. Chaque tronçon de ladite poutre contient en sus les organes de transmission qui entraînent les disques correspondants en rotation et qui sont constitués par une cascade de pignons engrenant les uns avec les autres. A cet effet, chaque tronçon de ladite poutre est réalisé sous forme de carter étanche contenant un lubrifiant destiné à la lubrification desdits organes de transmission.

Comme les utilisateurs veulent couper le produit à récolter le plus près possible de la surface du sol, il faut que l'épaisseur de la poutre soit relativement faible. En pratique, il pourrait alors s'avérer qu'avec des largeurs de travail relativement importantes, ladite poutre, c'est-à-dire en fait la barre de coupe constitue un ensemble relativement souple dans un plan sensiblement vertical et s'étendant transversalement à la direction de travail. Or, cette souplesse peut s'avérer préjudiciable à plusieurs égards, notamment pour la durée de vie de la barre de coupe.

Il est connu de rigidifier une barre de coupe en munissant sa poutre d'un important raidisseur disposé essentiellement derrière la poutre (FR-A-2 572 246 par exemple). Cette solution comporte plusieurs inconvénients. En effet, un premier inconvénient réside dans le fait que la largeur de la poutre mesurée suivant la direction de travail, augmente substantiellement, de sorte que les disques ne peuvent pas toujours, en tournant, balayer correctement toute la surface supérieure de la poutre et du raidisseur. De cette sorte, il peut arriver que, dans certaines conditions de travail, des accumulations de terre et/ou de débris végétaux se forment aux endroits non balayés par les disques. Or, ces accumulations peuvent s'avérer gênantes pour le bon écoulement du produit coupé vers l'arrière de la barre de coupe. Un deuxième inconvénient du raidisseur réside dans le fait qu'il alourdit la barre de coupe qui nécessite déjà par ailleurs comme connu un mécanisme d'allégement pour ne pas reposer trop lourdement sur le sol. Un troisième inconvénient du raidisseur réside dans le fait que pour remplir correctement son rôle de rigidification, le raidisseur doit être lié le plus intimement possible à la poutre. Ceci nécessite en conséquence un grand nombre d'organes de fixation. Un quatrième grand inconvénient du raidisseur réside dans le fait qu'il renchérit la barre de coupe.

Le but de la présente invention est de créer une rigidification correcte de la barre de coupe d'une faucheuse de largeur de coupe importante qui ne possède pas les inconvénients des raidisseurs connus, notamment celui de gêner l'écoulement du fourrage coupé.

Dans ce but, la faucheuse selon l'invention est caractérisée par la combinaison des moyens suivants :
a) la barre de coupe est liée au châssis par au moins un organe de liaison supplémentaire s'étendant entre les deux organes de liaison agencés dans le voisinage des extrémités de la barre de coupe ;
b) de chaque côté de l'organe de liaison supplémentaire est prévu un organe de transport tournant autour d'un axe respectif dirigé vers le haut, lesdits organes d'entraînement et de transmission étant adaptés pour entraîner chaque organe de transport en rotation autour de l'axe respectif dirigé vers le haut dans un sens tel que - faucheuse vue de l'arrière dans le sens de travail - l'organe de transport situé à gauche de l'organe de liaison supplémentaire tourne dans le sens contraire des aiguilles d'une montre, tandis que l'organe de transport situé à droite de l'organe de liaison supplémentaire tourne dans le sens des aiguilles d'une montre ; et
c) le bord frontal de l'organe de liaison supplémentaire s'étend vers l'arrière et vers le bas jusque dans le voisinage du plan de coupe des organes de coupe et dans la zone d'action des organes de transport situés de part et d'autre de l'organe de liaison supplémentaire.

Dotée de ces moyens, la faucheuse selon l'invention répond tout à fait au but fixé.

En effet, l'organe de liaison supplémentaire s'étendant entre les deux organes de liaison agencés dans le voisinage des extrémités de la barre de coupe, diminue substantiellement la flèche de la barre de coupe sous l'effet des efforts extérieurs qui agissent sur ladite barre de coupe. Les moyens b) et c) quant à eux, coopèrent en vue d'éviter l'accrochage de produit coupé à l'organe de liaison supplémentaire. En effet, du fait que les organes de transport, s'étendant de chaque côté de l'organe de liaison supplémentaire, sont entraînés dans le sens de rotation indiqué, ils tournent en divergeant vers l'avant dans le sens de travail, de sorte qu'ils éloignent une grande partie du produit coupé de l'organe de liaison supplémentaire. La partie restante du produit coupé qui n'a pas pu être éloignée à temps, arrive en contact avec le bord frontal de l'organe de liaison supplémentaire. Mais, compte tenu de l'agencement particulier de ce bord frontal, celui-ci force cette partie de produit coupé à se déplacer vers le bas dans la zone d'action desdits organes de transport qui s'étendent de part et d'autre de l'organe de liaison supplémentaire. Arrivant dans la zone d'action de ceux-ci, le produit coupé est ensuite éloigné de l'organe de liaison supplémentaire et évacué.

Selon une réalisation préférentielle, l'organe de liaison supplémentaire s'étend au milieu de la distance séparant les axes de rotation desdits organes de transport.

Dans l'invention, il est également prévu que l'extrémité inférieure du bord frontal de l'organe de liaison supplémentaire est, en vue de dessus, située dans le voisinage du front de coupe des organes de coupe s'étendant dans le voisinage de l'organe de liaison supplémentaire.

De même, il est également prévu dans l'invention que l'extrémité supérieure dudit bord frontal est, en vue de dessus, située nettement devant ledit front de coupe.

D'autres caractéristiques et avantages de l'invention sont contenus dans les sous-revendications, ainsi que dans la description suivante faite en référence au dessin annexé dont :

- La figure 1 représente une vue frontale d'une faucheuse conforme à l'inventions ;
- La figure 2 représente à une échelle agrandie une vue de dessus de la partie médiane de la barre de coupe de la faucheuse de la figure 1, coupée suivant le plan II-II défini sur la figure 3 ; et
- La figure 3 représente à une échelle agrandie une vue latérale de la faucheuse des figures 1 et 2, coupée suivant le plan III-III défini sur les figures 1 et 2.

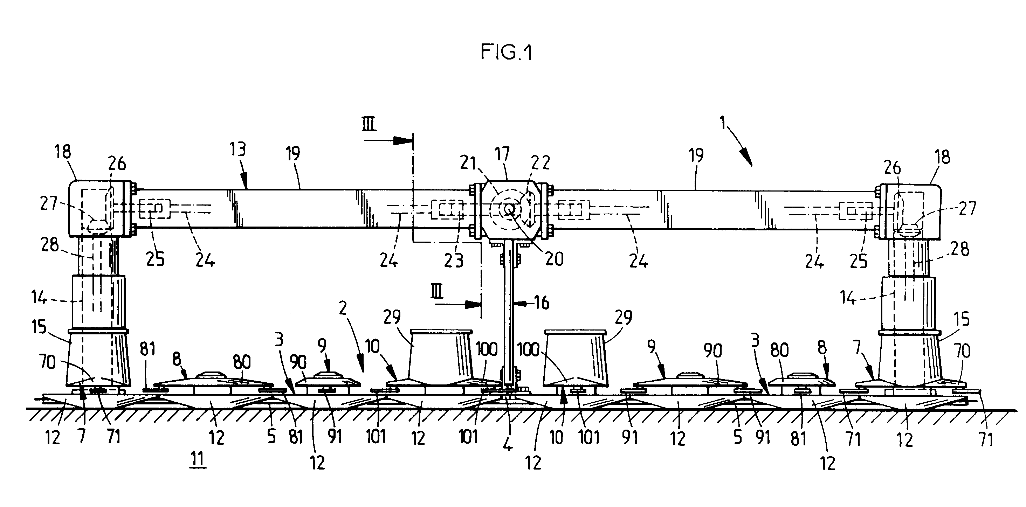

La faucheuse (1) selon l'invention, telle que représentée sur les figures 1 à 3, comporte une barre de coupe (2). Cette barre de coupe (2) est réalisée à partir de deux tronçons de barre de coupe (3) qui sont accouplés l'un à l'autre au moyen d'un organe d'accouplement (4).

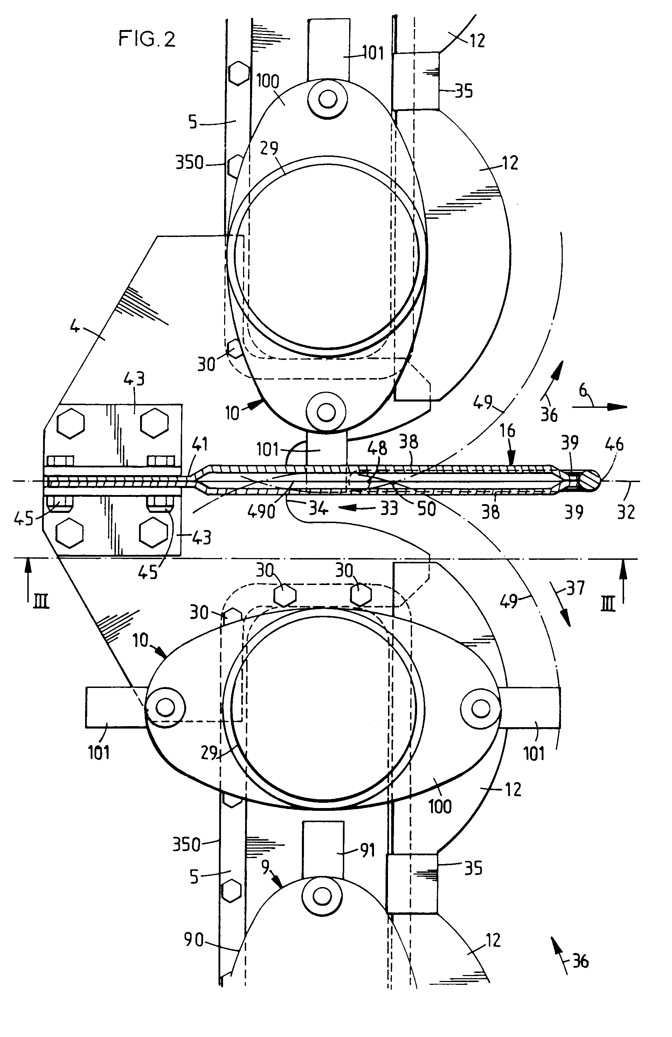

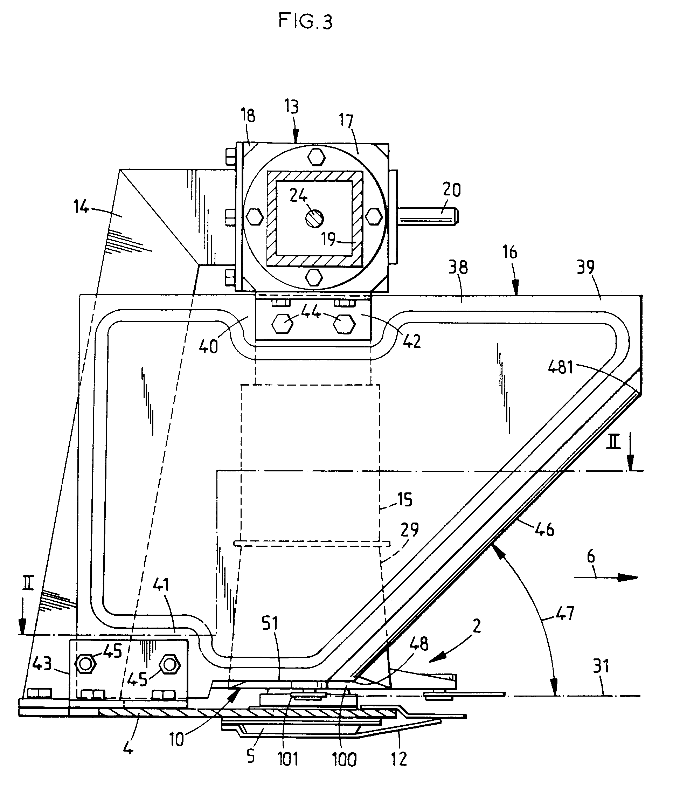

Chaque tronçon de barre de coupe (3) est constitué d'un carter (5) s'étendant transversalement à la direction de travail (6) (voir figures 2 et 3). Chaque carter (5) supporte à sa partie supérieure un certain nombre d'organes de coupe rotatifs (7, 8, 9, 10) qui y sont guidés en rotation de manière à tourner chacun autour d'un axe dirigé vers le haut. Chaque organe de coupe (7, 8, 9, 10) comporte un disque (70, 80, 90, 100) muni de deux couteaux (71, 81, 91, 101). Dans l'exemple représenté, les disques (70, 80, 90, 100) ont une forme ovale et les couteaux (71, 81, 91, 101) sont agencés dans le grand axe de l'ovale et sont fixés de manière articulée près du périmètre extérieur du disque (70, 80, 90, 100) respectif.

Pendant le travail, la barre de coupe (2) ainsi formée glisse sur le sol (11) par l'intermédiaire de patins (12). Ces patins (12) remplissent en sus une fonction de protection frontale des organes de coupe rotatifs (7, 8, 9, 10).

Cette barre de coupe (2) est liée à un châssis (13) au moyen de deux organes de liaison (14) (voir figure 3) qui s'étendent chacun près d une extrémité de la barre de coupe (2). Vu dans le sens de travail (6), ces organes de liaison (14) s'étendent chacun derrière l'organe de coupe rotatif (7) agencé à l'extrémité correspondante de la barre de coupe (2). Afin d'éviter que du fourrage coupé ne puisse rester accroché aux organes de liaison (14), chaque organe de coupe rotatif (7) est surmonté par un tambour d'andainage (15) qui tourne avec l'organe de coupe (7) respectif. Chaque tambour d'andainage (15) a pour fonction de transporter le fourrage coupé par l'organe de coupe (7) qu'il surmonte, dans le flux de fourrage coupé par les organes de coupe (8, 9) voisins. En conséquence, ce fourrage coupé ne peut arriver dans la zone de l'organe de liaison (14).

Selon l'invention, la barre de coupe (2) est également liée au châssis (13) dans sa partie médiane. Cette liaison est réalisée par un organe de liaison supplémentaire (16) qui sera décrit ultérieurement plus en détail.

Le châssis (13) est formé par un carter central (17), par deux carters latéraux (18) et par deux tubes entretoises (19) fixés chacun entre le carter central (17) et le carter latéral (18) respectif. Sur la figure 3, on voit par ailleurs que chaque organe de liaison (14) est lié au carter latéral (18) s'étendant au-dessus de l'extrémité respective de la barre de coupe (2).

Comme visible sur la figure 1, le châssis (13) supporte également des organes d'entraînement des organes de coupe rotatifs (7, 8, 9, 10) et des tambours d'andainage (15). Ces organes d entraînement comportent tout d'abord un arbre d'entrée (20) sensiblement dirigé suivant la direction de travail (6)et qui est lié en rotation à une roue dentée conique (21). Cette roue dentée conique (21) engrène avec une roue dentée conique (22) liée en rotation à un arbre de distribution (23) ayant une extrémité qui pénètre dans chacun des tubes entretoises (19). A chacune de ses extrémités, l'arbre de distribution (23) est accouplé à une extrémité d'un arbre de transmission (24) qui s'étend à l'intérieur du tube entretoise (19) respectif et qui est accouplé à son autre extrémité à l'arbre d'entrée (25) du carter latéral (18) respectif. A l'intérieur de chaque carter latéral (18), l'arbre d'entrée (25) respectif est lié en rotation à une roue dentée conique (26) qui engrène avec une roue dentée conique (27) liée en rotation à l'extrémité supérieure d'un arbre d'entraînement (28). Chaque arbre d'entraînement (28) est colinéaire avec l'axe de rotation de l'organe de coupe (7) et du tambour d'andainage (15) respectifs s'étendant sous le carter latéral (18) correspondant. Chaque arbre d'entraînement (28) entraîne en rotation l'organe de coupe (7) et le tambour d'andainage (15) du tronçon de barre de coupe (3) respectif ainsi que des organes de transmission logés dans le carter (5) dudit tronçon de barre de coupe (3) respectif. Ces organes de tranmission non représentés, mais connus de l'homme de l'art, servent à entraîner en rotation les organes de coupe (8, 9, 10) suivants de chaque tronçon de barre de coupe (3).

Sur la figure 1, on voit encore que les organes de coupe rotatifs (10) s'étendant de part et d'autre de l'organe de liaison supplémentaire (16), sont surmontés par un tambour de transport (29). Chaque tambour de transport (29) est lié en rotation avec l'organe de coupe (10) qu'il surmonte et tourne autour du même axe de rotation que ledit organe de coupe (10). Les organes de transmission logés à l'intérieur du carter (5) de chaque tronçon de barre de coupe (3) entraînent donc également le tambour de transport (29) correspondant.

Dans les figures, on a volontairement omis de représenter un certain nombre d'organes tels que par exemple un dispositif d'attelage permettant d'atteler la faucheuse selon l'invention à un véhicule tracteur. De tels dispositifs d'attelage sont en effet à la portée de l'homme de l'art. On n'a pas non plus représenté la source motrice qui entraîne l'arbre d'entrée (20) du carter central (17) car celle-ci est également à la portée de l'homme de l'art.

Sur la figure 2, on voit la partie médiane de la barre de coupe (2) formée par les deux tronçons de barre de coupe (3) accouplés l'un à l'autre par l'organe d'accouplement (4). Cet organe d'accouplement (4) est réalisé sous forme de plaque et est lié au carter (5) de chaque tronçon de barre de coupe (3) au moyen de boulons (30). Comme visible, l'organe d'accouplement (4) s'étend également en-dessous du plan de coupe (31) des organes de coupe (10) agencés à ces extrémités des tronçons de barre de coupe (3). A l'avant, l'organe d'accouplement (4) comporte, centrée sur le plan de symétrie (32) de la barre de coupe (2), une découpe (33) ayant en vue de dessus une forme sensiblement en U. De cette sorte, le bord frontal (34) de l'organe d'accouplement (4) est très en retrait par rapport au bord frontal (35) des tronçons de barre de coupe (3). De cette sorte, on évite que des accumulations de terre et/ou de débris végétaux qui peuvent se former à cet endroit, ne grandissent à un tel point qu'elles pourraient gêner le bon fauchage du fourrage qui se présente à cet endroit.

Sur les figures 2 et 3, on voit également l'organe de liaison supplémentaire (16) bien en détail. Cet organe de liaison supplémentaire (16) s'étend dans le plan de symétrie (32) dirigé suivant la direction de travail (6). L'organe de liaison supplémentaire (16) s'étend donc symétriquement entre les deux organes de coupe (10) surmontés par les tambours de transport (29). Vu dans le sens de travail (6), l'organe de coupe (10) situé à gauche de l'organe de liaison supplémentaire (16), de même que le tambour de transport (29) correspondant tournent dans le sens contraire des aiguilles d'une montre (36), tandis que l'organe de coupe (10) situé à droite de l'organe de liaison supplémentaire (16), de même que le tambour de transport (29) correspondant tournent dans le sens des aiguilles d'une montre (37). Ainsi, les mouvements de rotation des organes de coupe (10) et des tambours de transport (29) correspondants situés de part et d'autre de l'organe de liaison supplémentaire (16), divergent à l'avant de la barre de coupe (2).

Dans l'exemple représenté, l'organe de liaison supplémentaire (16) est formé par deux plaques (38). Ces plaques (38) sont embouties sur pratiquement toute leur surface. Seul le périmètre extérieur (39) de chaque plaque (38) n'a pas subi d'emboutissage. Les deux plaques (38) sont assemblées l'une à l'autre par leurs périmètres extérieurs (39) qui se touchent, tandis que les parties embouties sont éloignées l'une de l'autre. Avec cet agencement, l'organe de liaison supplémentaire (16) possède une bonne rigidité sans toutefois avoir une grande épaisseur et sans poids excessif.

Dans la partie médiane supérieure, respectivement dans la partie arrière inférieure, le périmètre extérieur (39) des plaques (38) présente une surface non emboutie (40, respectivement 41) plus importante que par ailleurs. C'est en ces deux endroits que s'opère la liaison de l'organe de liaison supplémentaire (16) au carter central (17) du châssis (13), respectivement à l'organe d'accouplement (4) de la barre de coupe (2). Cette liaison est réalisée de manière très simple par deux équerres (42) fixées au carter central (17), respectivement par deux équerres (43) fixées à l'organe d'accouplement (4), entre lesquelles sont coincées les deux plaques (38) à l'aide de boulons (44, respectivement 45). On notera que les équerres (43) s'étendent sensiblement derrière le bord arrière (350) des tronçons de barre de coupe(3).

Le bord frontal (46) de l'organe de liaison supplémentaire (16) est sur une grande partie de sa longueur incliné vers l'arrière et vers le bas suivant un angle (47) qui a, dans l'exemple représenté, une valeur d'environ 45°. Le bord frontal (46) s'étend jusqu'à une courte distance au-dessus du plan de coupe (31). En sus, l'extrémité inférieure (48) est, en vue de dessus, située à l'intérieur de la surface commune (490) délimitée par les trajectoires extrêmes sécantes (49) décrites par les organes de coupe (10). Dans l'invention, cette extrémité inférieure (48) pourra également s'étendre légèrement devant le point d'intersection avant (50) de ces trajectoires extrêmes (49). A la partie inférieure, l'organe de liaison supplémentaire (16) comporte un bord inférieur (51) s'étendant vers l'arrière à partir de l'extrémité inférieure (48) du bord frontal (46) sensiblement parallèlement au plan de coupe (31).

Sur la figure 2, on voit enfin encore que le bord frontal (46) de l'organe de liaison supplémentaire (16) est en fait formé par un profilé de section ronde.

La faucheuse selon l'invention qui vient d'être décrite fonctionne de la manière suivante.

Au travail, la faucheuse est déplacée dans le sens de travail (6) par un véhicule tracteur non représenté. Une source motrice, telle que la prise de force du véhicule tracteur par exemple, entraîne en rotation les organes de coupe (7, 8, 9, 10) ainsi que les tambours d'andainage (15) et les tambours de transport (29).

La barre de coupe (2) qui glisse sur le sol (11), est soumis à des efforts qui la déforment. Cette déformation est cependant substantiellement limitée par l'organe de liaison supplémentaire (16).

Cet organe de liaison supplémentaire (16) a une forme particulière qui collabore avec des organes de transport situés de part et d'autre de l'organe de liaison supplémentaire (16) pour éviter que du fourrage coupé par les couteaux (101) des organes de coupe (10) ne reste accroché à l'organe de liaison supplémentaire (16). Dans l'exemple de réalisation représenté, les organes de transport précités sont constitués par les couteaux (101) qui, outre leur fonction de coupe, ont également une fonction de transport, les disques (100) et les tambours de transport (29).

Au travail, une grande partie du fourrage coupé par les couteaux (101) des organes de coupe (10) est éloignée de l'organe de liaison supplémentaire (16) par les couteaux (101), les disques (100) et les tambours de transport (29). La partie restante du fourrage coupé par les couteaux (101) qui n'a pas pu être éloignée à temps, arrive en contact avec le bord frontal (46) qui, compte tenu de son inclinaison vers l'arrière et vers le bas, force ce fourrage coupé à se déplacer vers le bas dans la zone d'action des couteaux (101) et surtout des disques (100). Ce fourrage coupé est alors agrippé par lesdits couteaux (101) et lesdits disques (100) pour être éloigné de l'organe de liaison supplémentaire (16) et déposé derrière la barre de coupe (2). Compte tenu de la forme arrondie du bord frontal (46) de l'organe de liaison supplémentaire (16), on évite que des brins de fourrage ne soient pliés. Ces brins peuvent donc mieux glisser vers la zone d'action des organes de transport.

Diverses modifications ou améliorations peuvent être apportées à l'exemple de réalisation qui vient d'être décrit sans qu'on ne sorte pour autant du cadre de la présente invention tel que défini dans les revendications suivantes.

En particulier, la faucheuse (1) pourra en sus comporter des organes de traitement du fourrage coupé par les organes de coupe (7, 8, 9, 10) de la barre de coupe (2).

**Revendications**

1. Faucheuse (1) comportant :
   - un châssis (13),
   - une barre de coupe (2) réalisée en un ou plusieurs tronçons (3) et munie d'organes de coupe (7, 8, 9, 10), ladite barre de coupe (2) d'épaisseur relativement faible, étant liée audit châssis (13) au moyen d'organes de liaison (14) s'étendant dans le voisinage de chacune des extrémités de ladite barre de coupe (2), et
   - des organes d'entraînement (20, 21, 22, 23, 24, 25, 26, 27, 28) et des organes de transmission destinés à la mise en mouvement des organes de coupe (7, 8, 9, 10),

   caractérisée par la combinaison des moyens suivants :
   a) la barre de coupe (2) est liée au châssis (13) par au moins un organe de liaison supplémentaire (16) s'étendant entre les deux organes de liaison (14) agencés dans le voisinage des extrémités de la barre de coupe (2) ;
   b) de chaque côté de l'organe de liaison supplémentaire (16) est prévu un organe de transport (101, 100, 29), tournant autour d'un axe respectif dirigé vers le haut, lesdits organes d'entraînement (20, 21, 22, 23, 24, 25, 26, 27, 28) et de transmission étant adaptés pour entraîner chaque organe de transport (101, 100, 29) en rotation autour de l'axe respectif dirigé vers le haut, dans un sens tel que - faucheuse (1) vue de l'arrière dans le sens de travail (6) - l'organe de transport (101, 100, 29) situé à gauche de l'organe de liaison supplémentaire (16) tourne dans le sens contraire des aiguilles d'une montre (36), tandis que l'organe de transport (101, 100, 29) situé à droite de l'organe de liaison supplémentaire (16) tourne dans le sens des aiguilles d'une montre (37) ; et

c) le bord frontal (46) de l'organe de liaison supplémentaire (16) s'étend vers l'arrière et vers le bas jusque dans le voisinage du plan de coupe (31) des organes de coupe (10) et dans la zone d'action des organes de transport (101, 100, 29) situés de part et d'autre de l'organe de liaison supplémentaire (16).

2. Faucheuse selon la revendication 1, caractérisée par le fait que l'organe de liaison supplémentaire (16) s'étend au milieu de la distance séparant les axes de rotation des organes de transport (101, 100, 29).

3. Faucheuse selon la revendication 1 ou 2, caractérisée par le fait que l'organe de liaison supplémentaire (16) s'étend dans le plan de symétrie (32) de la barre de coupe (2).

4. Faucheuse selon l'une au moins des revendications 1 à 3, caractérisée par le fait que l'extrémité inférieure (48) du bord frontal (46) est, en vue de dessus, située dans le voisinage du front de coupe des organes de coupe (10) s'étendant dans le voisinage de l'organe de liaison supplémentaire (16).

5. Faucheuse selon l'une au moins des revendications 1 à 4, caractérisée par le fait que l'extrémité supérieure (481) du bord frontal (46) est, en vue de dessus, située nettement devant le front de coupe des organes de coupe (10) s'étendant dans le voisinage de l'organe de liaison supplémentaire (16).

6. Faucheuse selon l'une au moins des revendications 1 à 5, caractérisée par le fait que le bord frontal (46) fait un angle (47) d'environ 45° avec le plan de coupe (31) des organes de coupe (10) s'étendant dans le voisinage de l'organe de liaison supplémentaire (16).

7. Faucheuse selon l'une au moins des revendications 1 à 6, caractérisée par le fait qu'à l'extrémité inférieure (48) du bord frontal (46) est raccordé un bord inférieur (51) qui s'étend vers l'arrière sensiblement parallèlement au plan de coupe (31) des organes de coupe (10) s'étendant dans le voisinage de l'organe de liaison supplémentaire (16).

8. Faucheuse selon l'une au moins des revendications 1 à 7, caractérisée par le fait que le bord frontal (46) de l'organe de liaison supplémentaire (16) est arrondi.

9. Faucheuse selon l'une au moins des revendications 1 à 8, caractérisée par le fait que l'organe de liaison supplémentaire (16) est formé par deux plaques (38) embouties sur pratiquement toute leur surface sauf le long de leur périmètre extérieur (39), les deux plaques (38) étant assemblées l'une à l'autre par leurs périmètres extérieurs (39) qui se touchent, tandis que les parties embouties desdites plaques (38) sont éloignées l'une de l'autre.

10. Faucheuse selon la revendication 8 ou les revendications 8 et 9, caractérisée par le fait que le bord frontal (46) est constitué par un profilé de section ronde.

11. Faucheuse selon l'une au moins des revendications 1 à 10, caractérisée par le fait que l'organe de liaison supplémentaire (16) est lié à la barre de coupe (2) sensiblement derrière le bord arrière (350) de celle-ci.

12. Faucheuse selon l'une au moins des revendications 1 à 11, caractérisée par le fait que la barre de coupe (2) est formée par deux tronçons de barre de coupe (3) liés entre eux au moyen d'un organe d'accouplement (4), et que l'organe de liaison supplémentaire (16) est lié audit organe d'accouplement (4).

13. Faucheuse selon l'une au moins des revendications 1 à 12, caractérisée par le fait que de part et d'autre de l'organe de liaison supplémentaire (16) s'étend un organe de coupe (10) tournant, lesdits organes de coupe (10) ayant des trajectoires extrêmes (49) sécantes.

14. Faucheuse selon la revendication 13, caractérisée par le fait que lesdits organes de coupe (10) sont rotatifs.

15. Faucheuse selon la revendication 13 ou 14, caractérisée par le fait que chaque organe de coupe (10) est adapté pour tourner autour du même axe de rotation que l'organe de transport (101, 100, 29) s'étendant du même côté de l'organe de liaison supplémentaire (16).

16. Faucheuse selon l'une des revendications 13 à 15, caractérisée par le fait que chaque organe de coupe (10) est adapté pour tourner dans le même sens de rotation (36 ; 37) que l'organe de transport (101, 100, 29) s'étendant du même côté de l'organe de liaison supplémentaire (16).

17. Faucheuse selon l'une des revendications 13 à 16, caractérisée par le fait que l'extrémité inférieure (48) du bord frontal (46) de l'organe de liaison supplémentaire (16) s'étend, en vue de dessus, à l'intérieur de la surface commune (490) délimitée par les trajectoires extrêmes (49) des organes de coupe (10), ou légèrement devant le point d'intersection avant (50) desdites trajectoires extrêmes (49).

18. Faucheuse selon l'une au moins des revendications 1 à 17, caractérisée par le fait que chaque organe de transport comporte un tambour (29).

**Claims**

1. Mower (1) comprising :
   - a frame (13),
   - a cutterbar (2) made of one or more sections (3) and comprising cutting elements (7, 8, 9, 10), said cutterbar (2) of a relatively slight thickness, being connected to said frame (13) by means of connecting elements (14) extending in the vicinity of each of the ends of said cutterbar (2), and
   - driving elements (20, 21, 22, 23, 24, 25, 26, 27, 28) and transmission elements for the setting in motion of the cutting elements (7, 8, 9, 10),
   characterized by the combination of the following means:
   a) the cutterbar (2) is connected to the frame (13) by at least one additional connecting element (16) extending between the two connecting elements (14) located in the vicinity of the ends of the cutterbar (2) ;
   b) on each side of the additional connecting element (16) is provided a conveying element (101, 100, 29) rotating around a respective upwardly directed axis, said driving elements (20, 21, 22, 23, 24, 25, 26, 27, 28) and said transmission elements being adapted to drive each conveying element (101, 100, 29) in rotation around the respective upwardly directed axis, in a direction such that - mower (1) seen from behind in the direction of work (6) - the conveying element (101, 100, 29) located at the left side of the additional connecting element (16) turns in the counter-clockwise direction (36), whereas the conveying element (101, 100, 29) located at the right side of the additional connecting element (16) turns in the clockwise direction (37) ; and
   c) the front edge (46) of the additional connection element (16) extends backwardly and downwardly to the vicinity of the cutting plane (31) of the cutting elements (10) and in the working zone of the conveying elements (101, 100, 29) located on either side of the additional connecting element (16).

2. Mower according to claim 1, characterized in that the additional connecting element (16) extends in the middle of the distance separating the axes of rotation of the conveying elements (101, 100, 29).

3. Mower according to claim 1 or 2, characterized in that the additional connecting element (16) extends in the symmetry-plane (32) of the cutterbar (2).

4. Mower according to at least one of claims 1 to 3, characterized in that the lower end (48) of the front edge (46) is, in top view, located in the vicinity of the cutting front of the cutting elements (10) extending in the vicinity of the additional connecting element (16).

5. Mower according to at least one of claims 1 to 4, characterized in that the upper end (481) of the front edge (46) is, in top view, located clearly in front of the cutting front of the cutting elements (10) extending in the vicinity of the additional connecting element (16).

6. Mower according to at least one of claims 1 to 5, characterized in that the front edge (46) makes an angle (47) of about 45° with the cutting plane (31) of the cutting elements (10) extending in the vicinity of the additional connecting element (16).

7. Mower according to at least one of claims 1 to 6, characterized in that to the lower end (48) of the front edge (46) is connected a lower edge (51) extending backwardly approximately in parallel to the cutting plane (31) of the cutting elements (10) extending in the vicinity of the additional connecting element (16).

8. Mower according to at least one of Claims 1 to 7, characterized in that the front edge (46) of the additional connecting element (16) is rounded.

9. Mower according to at least one of claims 1 to 8, characterized in that the additional connecting element (16) is formed by two plates (38) which are stamped on nearly their whole surface except along their outer perimeter (39), the two plates (38) being assembled one to the other by means of their outer perimeters (39), which touch one another, whereas the stamped parts of said plates (38) are separated one from the other.

10. Mower according to claim 8 or to claims 8 and 9, characterized in that the front edge (46) is constituted by a section with a rounded cross-section.

11. Mower according to at least one of claims 1 to 10, characterized in that the additional connecting element (16) is connected to the cutterbar (2) approximately behind the rear edge (350) of said cutterbar.

12. Mower according to at least one of claims 1 to 11, characterized in that the cutterbar (2) is made up of two cutterbar sections (3) connected one to the other by means of a coupling element (4), and that the additional connecting element (16) is connected to said coupling element (4).

13. Mower according to at least one of claims 1 to 12, characterized in that on either side of the additional connecting element (16) extends a turning cutting element (10), said cutting elements (10) having intersecting outer paths (49).

14. Mower according to claim 13, characterized in that said cutting elements (10) are rotating elements.

15. Mower according to claim 13 or 14, characterized in that each cutting element (10) is adapted to turn around the same axis of rotation as the conveying element (101, 100, 29) extending on the same side of the additional connecting element (16).

16. Mower according to one of the claims 13 to 15, characterized in that each cutting element (10) is adapted to turn in the same direction of rotation (36 ; 37) as the conveying element (101, 100, 29) extending on the same side of the additional connecting element (16).

17. Mower according to one of claims 13 to 16, characterized in that the lower end (48) of the front edge (46) of the additional connecting element (16) extends, in top view, inside of the common surface (490) delimited by the outer paths (49) of the cutting elements (10), or slightly in front of the forward intersection point (50) of said outer paths (49).

18. Mower according to at least one of claims 1 to 17, characterized in that each conveying element comprises a drum (29).

**Patentansprüche**

1. Mähmaschine (1) bestehend aus:
   - einem Rahmen (13)
   - einem aus einem oder mehreren Abschnitten (3) gebildeten und mit Schneidorganen (7, 8, 9, 10) versehenen Mähbalken (2), von relativ geringer Dicke, der mittels sich in der Nähe eines jeden Endes des Mähbalkens (2) erstreckenden Verbindungsorganen (14) mit dem Rahmen (13) verbunden ist, und
   - Antriebsorganen (20, 21, 22, 23, 24, 25, 26, 27, 28) und Übertragungsorganen, die dazu bestimmt sind die Schneidorgane (7, 8, 9, 10) in Bewegung zu setzen,

   gekennzeichnet durch die Kombination folgender Mitteln:

   a) der Mähbalken (2) ist mit dem Rahmen (13) mittels zumindest eines, sich zwischen den zwei, in der Nähe der Enden des Mähbalkens (2) angebrachten Verbindungsorganen (14) erstreckenden, zusätzlichen Verbindungsorgans (16) verbunden;

   b) auf beiden Seiten des zusätzlichen Verbindungsorgans (16) ist ein Transportorgan (101, 100, 29) vorgesehen, welches je um eine nach oben gerichtete Achse dreht, wobei die Antriebsorgane (20, 21, 22, 23, 24, 25, 26, 27, 28) und die Übertragungsorgane angepasst sind jedes Transportorgan (101, 100, 29) drehend um die entsprechende, nach oben gerichtete Achse in eine derartige Richtung anzutreiben, dass - Mähmaschine (1) von hinten in Arbeitsrichtung (6) gesehen - das sich links von dem zusätzlichen Verbindungsorgan (16) befindliche Transportorgan (101, 100, 29) gegen den Uhrzeigersinn (36) dreht, während das sich rechts von dem zusätzlichen Verbindungsorgan (16) befindliche Transportorgan (101, 100, 29) im Uhrzeigersinn (37) dreht; und

   c) die Vorderkante (46) des zusätzlichen Verbindungsorgans (16) erstreckt sich nach hinten und nach unten, bis in die Nähe der Schneidebene (31) der Schneidorgane (10) und in den Wirkungsbereich der Transportorgane (100, 101, 29), die sich auf beiden Seiten des zusätzlichen Verbindungsorgans (16) befinden.

**2.** Mähmaschine nach Anspruch 1, dadurch gekennzeichnet, dass das zusätzliche Verbindungsorgan (16) sich in der Mitte des Abstandes zwischen den Rotationsachsen der Transportorgane (101, 100, 29) erstreckt.

**3.** Mähmaschine nach Anspruch 1 oder 2, dadurch gekennzeichnet, dass das zusätzliche Verbindungsorgan (16) sich in der Symmetrieebene (32) des Mähbalkens (2) erstreckt.

**4.** Mähmaschine nach zumindest einem der Ansprüche 1 bis 3, dadurch gekennzeichnet, dass das untere Ende (48) der Vorderkante (46) sich, in Draufsicht, in der Nähe der Mähfront der sich in der Nähe des zusätzlichen Verbindungsorgans (16) erstreckenden Mähorgane (10) ertreckt.

**5.** Mähmaschine nach zumindest einem der Ansprüche 1 bis 4, dadurch gekennzeichnet, dass das obere Ende (481) der Vorderkante (46) sich, in Draufsicht, deutlich vor der Mähfront der sich in der Nähe des zusätzlichen Verbindungsorgans (16) erstreckenden Mähorgane (10) erstreckt.

**6.** Mähmaschine nach zumindest einem der Ansprüche 1 bis 5, dadurch gekennzeichnet, dass die Vorderkante (46) mit der Schneidebene (31) der sich in der Nähe des zusätzlichen Verbindungsorgans (16) erstreckenden Schneidorgane (10) einen Winkel (47) von etwa 45° bildet.

**7.** Mähmaschine nach zumindest einem der Ansprüche 1 bis 6, dadurch gekennzeichnet, dass an dem unteren Ende (48) der Vorderkante (46) eine untere Kante (51) angeschlossen ist, welche sich im wesentlichen parallel zu der Schneidebene (31) der sich in der Nähe des zusätzlichen Schneidorgans (16) erstreckenden Schneidorgane (10) nach hinten ertreckt.

**8.** Mähmaschine nach zumindest einem der Ansprüche 1 bis 7, dadurch gekennzeichnet, dass die Vorderkante (46) des zusätzlichen Verbindungsorgans (16) abgerundet ist.

**9.** Mähmaschine nach zumindest einem der Ansprüche 1 bis 8, dadurch gekennzeichnet, dass das zusätzliche Verbindungsorgan (16) aus zwei nahezu auf ihrer gesamten Fläche, ausser längs des äusseren Umfangs (39), ausgebuchteten Platten (38) besteht, wobei die zwei Platten (38) durch ihre äusseren Umfänge (39), welche sich berühren, miteinander verbunden sind, während die ausgebuchteten Teile der Platten (38) voneinander entfernt sind.

**10.** Mähmaschine nach Anspruch 8 oder den Ansprüchen 8 und 9, dadurch gekennzeichnet, dass die Vorderkante (46) aus einem Profilstahl mit rundem Querschnitt besteht.

**11.** Mähmaschine nach zumindest einem der Ansprüche 1 bis 10, dadurch gekennzeichnet, dass das zusätzliche Verbindungsorgan (16) an dem Mähbalken (2) im wesentlichen hinter dessen hinterem Rand (350) verbunden ist.

**12.** Mähmaschine nach zumindest einem der Ansprüche 1 bis 11, dadurch gekennzeichnet, dass der Mähbalken (2) aus zwei Mähbalkenabschnitten (3) besteht, welche mittels eines Kupplungsorgans (4) miteinander verbunden sind, und dass das zusätzliche Verbindungsorgan (16) mit dem Kupplungsorgan (4) verbunden ist.

**13.** Mähmaschine nach zumindest einem der Ansprüche 1 bis 12, dadurch gekennzeichnet, dass sich auf beiden Seiten des zusätzlichen Verbindungsorgans (16) ein umdrehendes Schneidorgan (10) erstreckt, welche Schneidorgane (10) sich schneidende äusserste Bahnen (49) beschreiben.

**14.** Mähmaschine nach Anspruch 13, dadurch gekennzeichnet, dass die Schneidorgane (10) rotierend sind.

**15.** Mähmaschine nach Anspruch 13 oder 14, dadurch gekennzeichnet, dass jedes Schneidorgan (10) um die gleiche Rotationsachse als das sich auf der gleichen Seite des zusätzlichen Verbindungsorgans (16) erstreckende Transportorgan (101, 100, 29) rotiert.

**16.** Mähmaschine nach zumindest einem der Ansprüche 13 bis 15, dadurch gekennzeichnet, dass jedes Schneidorgan (10) in die gleiche Drehrichtung (36 ; 37) als das sich auf der gleichen Seite des zusätzlichen Verbindungsorgans (16) erstreckende Transportorgan (101, 100, 29) rotiert.

**17.** Mähmaschine nach zumindest einem der Ansprüche 13 bis 16, dadurch gekennzeichnet, dass das untere Ende (48) der Vorderkante (46) des zusätzlichen Verbindungsorgans (16) sich, in Draufsicht, im innern der gemeinsamen, durch die äussersten Bahnen (49) der Schneidorgane (10) begrenzten Fläche (490) erstreckt, oder kurz vor dem vorderen Schnittpunkt (50) der äussersten Bahnen (49).

18. Mähmaschine nach zumindest einem der Ansprüche 1 bis 17, dadurch gekennzeichnet, dass jedes Transportorgan eine Trommel (29) aufweist.

FIG.1

**FIG.2**

FIG.3